(19) Europäisches Patentamt
European Patent Office
Office européen des brevets

(11) Veröffentlichungsnummer: **0 327 978 B1**

(12) **EUROPÄISCHE PATENTSCHRIFT**

(45) Veröffentlichungstag der Patentschrift: **03.11.93**

(51) Int. Cl.$^5$: **C08L 77/00**, //C08K3/00, C08K9/08,(C08L77/00,51:04, 23:08)

(21) Anmeldenummer: **89101850.9**

(22) Anmeldetag: **03.02.89**

Die Akte enthält technische Angaben, die nach dem Eingang der Anmeldung eingereicht wurden und die nicht in dieser Patentschrift enthalten sind.

# (54) Füllstoffhaltige Polyamid-Formmassen mit verbesserter Oberfläche und Lackierbarkeit.

(30) Priorität: **12.02.88 DE 3804392**

(43) Veröffentlichungstag der Anmeldung: **16.08.89 Patentblatt 89/33**

(45) Bekanntmachung des Hinweises auf die Patenterteilung: **03.11.93 Patentblatt 93/44**

(84) Benannte Vertragsstaaten: **BE CH DE ES FR GB IT LI NL**

(56) Entgegenhaltungen:
**EP-A- 0 040 926**
**EP-A- 0 096 264**
**WO-A-86/00697**
**FR-A- 2 372 202**

(73) Patentinhaber: **BASF Aktiengesellschaft**
**Carl-Bosch-Strasse 38**
**D-67063 Ludwigshafen(DE)**

(72) Erfinder: **Payne, Robert, Dr.**
**Bessemerstrasse 20**
**D-6700 Ludwigshafen(DE)**
Erfinder: **Goetz, Walter, Dr.**
**Jung-Stilling-Strasse 11**
**D-6750 Kaiserslautern(DE)**
Erfinder: **Wolf, Uwe**
**Turnerstrasse 122**
**D-6900 Heidelberg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 327 978 B1

## Beschreibung

Die vorliegende Erfindung betrifft füllstoffhaltige thermoplastische Formmassen mit verbesserter Lackierbarkeit, enthaltend als wesentliche Komponenten

A) 42 bis 90 Gew.% eines thermoplastischen Polyamids,

B) 9,5 bis 55 Gew.% faser- oder teilchenförmigen Füllstoffen oder deren Mischungen, und

C) 0,5 bis 3 Gew.% eines schlagzäh modifizierenden Kautschuks mit reaktiven Gruppen.

Darüberhinaus betrifft die Erfindung die Verwendung derartiger Formmassen zur Herstellung von Formkörpern und Folien sowie die aus den Formmassen erhältlichen Formkörper selbst.

Polyamide als Konstruktionswerkstoffe sind seit langem bekannt und haben in vielen Bereichen als Gehäusewerkstoffe oder andere Teile Verwendung gefunden, in denen neben guten mechanischen Eigenschaften auch eine ansprechende optische Gestaltung erforderlich ist.

Zur Erzielung einer ansprechenden Oberflächencharakteristik werden daher Formteile und Formkörper aus thermoplastischen Formmassen auf der Basis von Polyamiden häufig lackiert, d.h. mit einer Lackschicht versehen.

Es versteht sich, daß in diesen Fällen eine gute Haftung zwischen der Lackschicht und dem Formkörper angestrebt werden muß, damit bei der praktischen Anwendung die Lackschicht nicht zerstört wird.

In vielen Gebieten werden füllstoffhaltige Polyamide als Werkstoffe eingesetzt, da diese den Vorteil von besseren Steifigkeiten bieten.

Speziell bei derartigen Produkten läßt jedoch die Lackierbarkeit häufig zu wünschen übrig.

Insbesondere ist die Haftung zwischen Lackschicht und Oberfläche des Fertigteils häufig nicht zufriedenstellend; darüber hinaus werden auch häufig Schlieren an der Oberfläche gebildet, was den optischen Eindruck der Oberflächenstruktur beeinträchtigt.

Aufgabe der vorliegenden Erfindung war es daher, füllstoffhaltige Polyamid-Formmassen zur Verfügung zu stellen, die in den mechanischen Eigenschaften den bekannten füllstoffhaltigen Polyamid-Formmassen nicht nachstehen, sich diesen gegenüber jedoch durch eine verbesserte Lackierbarkeit, insbesondere eine deutlich bessere Lackhaftung und eine optisch ansprechendere Oberfläche auszeichnen.

Erfindungsgemäß wird diese Aufgabe durch die füllstoffhaltigen thermoplastischen Formmassen gemäß Anspruch 1 gelöst.

Als Komponente A) enthalten die erfindungsgemäßen thermoplastischen Formmassen 42 bis 90, vorzugsweise 50 bis 85 und insbesondere 58 bis 70 Gew.% eines thermoplastischen Polyamids.

Halbkristalline oder amorphe Harze mit einem Gewichtsmittelwert des Molekulargewichts von mindestens 5000, wie sie z.B. in den amerikanischen Patentschriften 2 071 250, 2 071 251, 2 130 523, 2 130 948, 2 241 322, 2 312 966, 2 512 606 und 3 393 210 beschrieben werden, werden bevorzugt eingesetzt.

Beispiele hierfür sind Polyamide, die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen sowie aromatische Dicarbonsäuren einsetzbar. Hier seien nur Adipinsäure, Azelainsäure, Sebacinsäure, Dodecandisäure und Terephthal- und/oder Isophthalsäure genannt.

Als Diamine eignen sich besonders Alkandiamine mit 6 bis 12, insbesondere 6 bis 8 Kohlenstoffatomen, sowie m-Xylylendiamin, Di-(4-aminophenyl)methan, Di-(4-aminocyclohexyl)methan, 2,2-Di-(4-aminophenyl)-propan oder 2,2-Di-(4-aminocyclohexyl)propan. Weiterhin sind Polyamide, die durch Copolymerisation zweier oder mehrerer der vorgenannten Monomeren erhältlich sind oder Mischungen mehrerer Polyamide geeignet.

Darüberhinaus seien noch erwähnt teilaromatische Copolyamide auf der Basis von Caprolactam, Adipinsäure, Hexamethylendiamin, Terephthalsäure und/oder Isophthalsäure. Von diesen seien Copolyamide mit wiederkehrenden Einheiten die sich von Caprolactam und/oder Adipinsäure/Hexamethylendiamin einerseits sowie Terephthalsäure und Hexamethylendiamin andererseits ableiten, genannt. Ein besonders geeignetes Herstellungsverfahren für derartige Produkte ist z.B. in der EP-A 129 195 und der EP-A 129 196 beschrieben.

Polyamidformmassen, welche Schlagzähmodifier enthalten, sind u.a. aus den EP-A 275 186 und EP-A 312 930 bekannt, wobei diese zusätzlich gegebenenfalls Füllstoffe enthalten können. Gemäß den Beispielen erfolgt der Zusatz des Kautschuks zur Schlagzähmodifizierung und in den für diesen Zweck üblichen Mengen.

Schließlich seien auch noch erwähnt Polyamide, die sich überwiegend oder vollständig von Einheiten ableiten, die durch Umsetzung von 1,4-Diaminobutan mit Adipinsäure ergeben. Herstellungsverfahren für Polyamide dieser Struktur werden z.B. in den EP-A 38 094, EP-A 38 582 und EP-A 39 524 beschrieben.

Die relative Viskosität der Polyamide A) liegt im allgemeinen im Bereich von 2,2 bis 5,0, gemessen in 96 gew.%iger Schwefelsäure bei 25 °C bei einer Konzentration von 1 g Polyamid pro 100 ml Schwefelsäure.

Als Komponente B) enthalten die erfindungsgemäßen füllstoffhaltigen thermoplastischen Formmassen 9,5 bis 55, vorzugsweise 14,5 bis 50 und insbesondere 15 bis 40 Gew.%, bezogen auf das Gesamtgewicht der Komponenten A) bis C), faser- oder teilchenförmige Füllstoffe oder deren Mischungen.

Als faserförmige Füllstoffe seien Glasfasern, Kohlenstoffasern, Aramidfasern oder faserförmige Silikate wie Wollastonit stellvertretend genannt. Auch Glaskugeln können vorteilhaft eingesetzt werden.

Bei der Verwendung von Glasfasern können diese zur besseren Verträglichkeit mit dem Polyamid oder dem Polyester mit einer Schlichte und einem Haftvermittler ausgerüstet sein. Im allgemeinen haben die verwendeten Glasfasern einen Durchmesser im Bereich von 6 bis 20 µm. Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Weitere geeignete Füllstoffe sind amorphe Kieselsäure, Asbest, Calciumsilikat (insbesondere Wollastonit), Aluminiumsilikat, Magnesiumcarbonat, Kaolin (vorzugsweise calcinierter Kaolin), Kreide, gepulverter Quarz, Glimmer und Feldspat. Von diesen werden Wollastonit und calcinierter Kaolin besonders bevorzugt.

Als wesentliche Komponente C), die für die Verbesserung der Lackierbarkeit und die verbesserte Oberflächenstruktur verantwortlich ist, enthalten die erfindungsgemäßen Formmassen 0,5 bis 3, vorzugsweise 0,8 bis 2,8 und insbesondere 1,0 bis 2,5 Gew.%, bezogen auf das Gesamtgewicht der Komponenten A) bis C), eines schlagzäh modifizierenden Kautschuks, welcher reaktive Gruppen aufweist.

Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

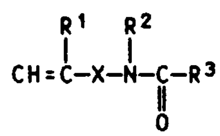

wobei die Substituenten folgende Bedeutung haben können:

- $R^1$ Wasserstoff oder eine $C_1$-$C_4$-Alkylgruppe,
- $R^2$ Wasserstoff, eine $C_1$-$C_8$-Alkylgruppe oder eine Arylgruppe, insbesondere Phenyl,
- $R^3$ Wasserstoff, eine $C_1$-$C_{10}$-Alkyl-, eine $C_6$-$C_{12}$-Alkylgruppe oder -$OR^4$,
- $R^4$ eine $C_1$-$C_8$-Alkyl- oder $C_6$-$C_{12}$-Alkylgruppe, die gegebenenfalls mit O- oder N-haltigen Gruppen substituiert sein können,
- X eine chemische Bindung, eine $C_1$-$C_{10}$-Alkylen- oder $C_6$-$C_{12}$-Alkylgruppe oder

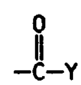

- Y O-Z- oder NH-Z und
- Z eine $C_1$-$C_{10}$-Alkylen- oder $C_6$-$C_{12}$-Arylengruppe.

Auch die in der EP-A 208 187 beschriebenen Pfropfmonomeren sind zur Einführung reaktiver Gruppen geeignet.

Beispiele für Monomere, mit denen die erwähnten funktionellen Gruppen eingeführt werden können sind Methacrylsäureglycidylester, Acrylsäureglycidylester, Allylglycidylether, Vinylglycidylether, Itaconsäureglycidylester, Acrylsäure, Methacrylsäure und ihre Metall-, insbesondere Alkalimetall- und Ammoniumsalze, Maleinsäure, Fumarsäure, Itaconsäure, Vinylbenzoesäure, Vinylphthalsäure, Monoester dieser Säuren mit Alkoholen ROH, wobei R bis zu 29 Kohlenstoffatome aufweist und z.B. eine Methyl-, Ethyl-, Propyl-, Isopropyl-, n-Butyl-, i-Butyl-, Hexyl-, Cyclohexyl-, Octyl-, 2-Ethylhexyl-, Decyl-, Stearyl-, Methoxyethyl-, Ethoxyethyl- oder Hydroxyethylgruppe darstellt. Maleinsäureanhydrid und Metallsalze (insbesondere Alkalimetall und Erdalkalimetallsalze) von polymerisierbaren Carbonsäuren sowie Ester von Acrylsäure oder Methacrylsäure mit tertiären Alkoholen, z.B. tert.-Butylacrylat weisen zwar keine freien Carboxylgruppen auf, kommen in ihrem Verhalten aber den freien Säuren nahe und werden deshalb als Monomere mit latenten Carboxylgruppen bezeichnet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Der Anteil der vorstehend aufgeführten Monomeren bzw. der von ihnen abgeleiteten Gruppen beträgt im allgemeinen 0,5 bis 40, vorzugsweise 1 bis 35 und insbesondere 1 bis 25 Gew.%, bezogen auf das Gesamtgewicht des Kautschuks.

Diese Monomeren können entweder mit den anderen Monomeren bereits bei der Herstellung des Kautschuks copolymerisiert werden oder aber auf einen bereits fertig vorliegenden, nicht modifizierten Kautschuk aufgepfropft werden (ggf. unter Mitverwendung von Initiatoren, z.B. Radikalstartern).

Entsprechende Verfahren sind dem Fachmann an sich bekannt, so daß sich hier nähere Angaben erübrigen.

Im folgenden seien einige bevorzugte Arten von Elastomeren, die erfindungsgemäß verwendet werden können, vorgestellt.

Im allgemeinen handelt es sich bei den Kautschuken um Copolymerisate, die bevorzugt aus mindestens zwei der folgenden Monomeren als Hauptkomponenten aufgebaut sind: Ethylen, Propylen, Butadien, Isobuten, Isopren, Chloropren, Vinylacetat, Styrol, Acrylnitril und Acryl- und Methacrylsäureester mit 1 bis 18 C-Atomen in der Alkoholkomponente.

Als erste bevorzugte Gruppe sind die sogenannten Ethylen-Propylen (EPM) bzw. Ethylen-Propylen-Dien-(EPDM)-Kautschuke zu nennen, die vorzugsweise ein Verhältnis von Ethylenresten zu Propylenresten im Bereich von 40:60 bis 90:10 aufweisen.

Die Mooney-Viskositäten (MLI + 4/100 °C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 °C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexadien-1,5,5-Ethylidennorbornen und Dicyclopentadien. Der Diengehalt der EPDM-Kautschuke beträgt vorzugsweise 0,5 bis 50, insbesondere 1 bis 8 Gew.%, bezogen auf das Gesamtgewicht des Kautschuks.

EPM- bzw. EPDM-Kautschuke werden vorzugsweise auch mit reaktiven Carbonsäuren oder deren Derivaten gepfropft. Hier seien nur Acrylsäure, Methacrylsäure und deren Derivate sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren, wie z.B. Maleinsäure und Fumarsäure bzw. Derivate dieser Säuren, wie z.B. Ester und Anhydride, und/oder Epoxy-Gruppen enthalten. Diese Dicarbonsäurederivate bzw. Epoxygruppen werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

$R_1C(COOR_2) = C(COOR_3)R_4$ (I)

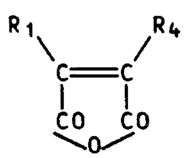

(II)

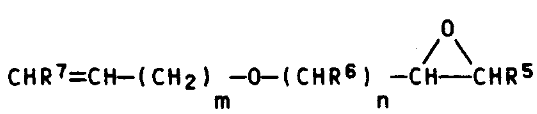

(III)

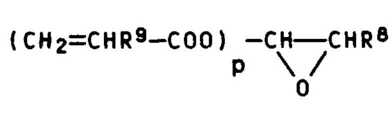

(IV)

wobei $R^1$ - $R^9$ Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Bevorzugt sind $R^1$ - $R^7$ Wasserstoff, und m hat den Wert 0 oder 1 und n ist 1. Die entsprechenden Verbindungen sind Maleinsäure, Fumarsäure, Maleinsäureanhydrid, Alkylglycidylether oder Vinylglycidylether.

Bevorzugte Verbindungen der Formeln I, II und III sind Maleinsäure, Maleinsäureanhydrid, Epoxygruppen-enthaltende Ester der Acrylsäure und/oder Methacrylsäure, wobei Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure- und/oder Methacrylsäureesters jeweils im Bereich von 1 bis 49 Gew.%.

Besonders bevorzugt sind Copolymerisate aus

50 bis 98, insbesondere 60 bis 95 Gew.% Ethylen,

0,5 bis 40, insbesondere 3 bis 20 Gew.% Glycidylacrylat und/oder Glycidylmethacrylat, Acrylsäure und/oder Maleinsäureanhydrid,

1 bis 45, insbesondere 10 bis 35 Gew.% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190 °C und 2,16 kg Belastung).

Bevorzugte Elastomere (Kautschuke) D) sind weiterhin reaktive Gruppen enthaltende Pfropfcopolymerisate mit Butadien, Butadien/Styrol-, Butadien/Acrylnitril und Acrylestern als Pfropfgrundlage, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk C) können auch Pfropfpolymerisate aus

25 bis 98 Gew.% eines Acrylatkautschuks mit einer Glasübergangstemperatur von unter -20 °C als Pfropfgrundlage (Basispolymer) und

2 bis 75 Gew.% eines copolymerisierbaren ethylenisch ungesättigten Monomeren, dessen Homo- bzw. Copolymerisate eine Glasübergangstemperatur von mehr als 25 °C aufweisen, als Pfropfauflage (Pfropfhülle)

eingesetzt werden.

Die Pfropfgrundlage sind Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird z.B. durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat, Triacryloylhexahydro-s-triazin und Triallylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25 °C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis von 1:1 bis 9:1.

Die Einführung der reaktiven Gruppen in Pfropfcopolymerisate kann z.B. durch Mitverwendung der entsprechenden Monomeren bei der Herstellung der Pfropfhülle erfolgen. In diesem Fall beträgt deren Anteil an der Pfropfmonomermischung vorzugsweise 0,5 bis 30, insbesondere 1 bis 25 Gew.%. Es ist auch möglich, die entsprechenden Monomeren als letzte Pfropfhülle getrennt aufzubringen.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke C) weisen vorzugsweise eine Glasübergangstemperatur von unter -30 °C, insbesondere von unter -40 °C auf.

Es versteht sich, daß auch Mischungen der vorstehend aufgeführten Kautschuktypen eingesetzt werden können.

Neben den wesentlichen Komponenten A) bis C) können die erfindungsgemäßen Formmassen übliche Zusatzstoffe und Verarbeitungshilfsmittel enthalten. Deren Anteil beträgt im allgemeinen bis zu 20, vorzugsweise bis zu 50 Gew.%, bezogen auf das Gesamtgewicht der Komponenten A) bis C).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, nicht verstärkende Füllstoffe und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der thermoplastischen Masse zugesetzt werden, sind Stearinsäuren, Stearylalkohol, Stearinsäurealkylester und -amide sowie Ester des Pentaerythrits mit langkettigen Fettsäuren.

Die erfindungsgemäßen Formmassen können nach an sich bekannten Verfahren hergestellt werden, indem man die Ausgangskomponenten in üblichen Mischvorrichtungen, wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen im allgemeinen im Bereich von 220 bis 350 °C, vorzugsweise von 230 bis 330 °C.

Erfindungsgemäße Massen können auch durch einen Pultrusionsvorgang hergestellt werden, wie er in EP-A 56 703 beschrieben wird. Dabei wird der Glasfaserstrang mit Polymermasse durchtränkt und anschließend abgekühlt und zerkleinert. Die Glasfaserlänge ist in diesem Fall identisch mit der Granulatlänge und liegt zwischen 3 und 20 mm.

Aufgrund ihrer Eigenschaften, insbesondere der guten Lackierbarkeit, eignen sich die erfindungsgemäßen füllstoffhaltigen thermoplastischen Formmassen insbesondere zur Herstellung von Formkörpern, die anschließend einer Lackierung unterzogen werden, z.B. Gehäusebauteilen oder dergleichen.

Beispiele 1 bis 5

Zur Herstellung von füllstoffhaltigen Formmassen wurden folgende Komponenten eingesetzt.

Komponente A

Poly-$\epsilon$-caprolactam mit einer relativen Viskosität, gemessen in 96 gew.%iger Schwefelsäure bei 25 °C (1 g/100 ml) von 2,7 (Ultramid® B 3 der BASF AG)

Komponente B

Wollastonit (Wollastokup® 10012 von NYCO, Willsboro, NY, USA; mittlere Teilchengröße 3,5 $\mu$m)

Komponente C

Ethylen-n-butylacrylat-acrylsäure-Copolymerisat (82 Gew.% Ethylen, 13 Gew.% n-Butylacrylat, 5 % Acrylsäure) mit einem Schmelzindex MFI (190 ° C, 2,16 kg) von 10,5 g/10 min

Die Komponenten A) bis C) wurden abgemischt, auf einem Zweischneckenextruder bei einer Massetemperatur von 250 ° C aufgeschmolzen, extrudiert und granuliert.

Anschließend wurden im Spritzgußverfahren daraus Formkörper zur Bestimmung des Elastizitätsmoduls nach DIN 53 457 sowie der Kerbschlagzähigkeit nach Izod (ISO A) hergestellt und die entsprechenden Messungen durchgeführt.

Die Lackhaftung wurde nach DIN 53 151 (Gitterschnittprüfung von Anstrichen und ähnlichen Beschichtungen) beurteilt.

Die Oberflächenbeurteilung der Formkörper wurde visuell vorgenommen.

Die Zusammensetzung der Formmassen und die Ergebnisse der Untersuchungen sind der nachfolgenden Tabelle zu entnehmen.

Tabelle

| Beispiel Nr. | Zusammensetzung (Gew.%) Komponente A | Komponente B | Komponente C | Lackhaftung | Oberfläche | Elastizitätsmodul nach DIN 53 457 MPa | Kerbschlagzähigkeit nach IZOD (ISO A) J/m bei 23°C |
|---|---|---|---|---|---|---|---|
| 1 | 70 | 30 | 0 | schlecht | Schlieren | 4820 | 73 |
| 2 | 69,5 | 30 | 0,5 | zufriedenstellend | wenig Schlieren | 4845 | 72 |
| 3 | 69 | 30 | 1,0 | gut | gut | 4790 | 74 |
| 4 | 68 | 30 | 2,0 | sehr gut | gut | 4750 | 75 |
| 5 | 66 | 30 | 4,0 | gut | einwandfrei | 4510 | 86 |

Man erkennt deutlich, daß sich die erfindungsgemäßen Formmassen gegenüber entsprechenden Formmassen ohne Kautschuk mit reaktiven Gruppen bei unveränderten mechanischen Eigenschaften durch eine verbesserte Lackhaftung und eine deutlich verbesserte Oberflächenqualität auszeichnen.

Gegenüber Massen mit höheren Anteilen an Kautschuk sind sie im Hinblick auf den Elastizitätsmodul überlegen.

## Patentansprüche

1. Füllstoffhaltige thermoplastische Formmassen mit verbesserter Oberfläche und Lackierbarkeit, enthaltend als wesentliche Komponenten
   A) 42 bis 90 Gew.% eines thermoplastischen Polyamids,
   B) 9,5 bis 55 Gew.% faser- oder teilchenförmigen Füllstoffen oder deren Mischungen, und
   C) 0,5 bis 3 Gew.% eines schlagzäh modifizierenden Kautschuks mit reaktiven Gruppen.

2. Füllstoffhaltige thermoplastische Formmassen nach Anspruch 1, dadurch gekennzeichnet, daß die reaktiven Gruppen im Kautschuk C) Epoxy-, Carboxyl-, latente Carboxyl-, Amino- oder Amidgruppen sind.

3. Füllstoffhaltige thermoplastische Formmassen nach Anspruch 1, dadurch gekennzeichnet, daß die reaktiven Gruppen sich von Acrylsäure, Methacrylsäure, tert.-Butylacrylat, Maleinsäureanhydrid, Glycidylacrylat oder Glycidylmethacrylat oder deren Mischungen ableiten.

4. Füllstoffhaltige thermoplastische Formmassen gemäß mindestens einem der Ansprüche 1 bis 3, dadurch gekennzeichnet, daß der Kautschuk C) ein Copolymerisat aus
   50 bis 95 Gew.% Ethylen,
   0,5 bis 40 Gew.% Glycidylacrylat, Glycidylmethacrylat, Acrylsäure oder Maleinsäureanhydrid oder deren Mischungen, und
   1 bis 45 Gew.% n-Butylacrylat oder 2-Ethylhexylacrylat oder deren Mischungen ist.

5. Verwendung der füllstoffhaltigen thermoplastischen Formmassen gemäß mindestens einem der Ansprüche 1 bis 4 zur Herstellung von Formkörpern.

6. Formkörper, erhältlich aus füllstoffhaltigen thermoplastischen Formmassen gemäß mindestens einem der Ansprüche 1 bis 4 als wesentlichen Komponenten.

## Claims

1. A filler-containing thermoplastic molding material having an improved surface and improved coatability, and containing, as essential components,
   A) from 42 to 90% by weight of a thermoplastic polyamide,
   B) from 9.5 to 55% by weight of fibrous or particulate fillers or mixtures of these and
   C) from 0.5 to 3% by weight of a rubber impact modifier having reactive groups.

2. A filler-containing thermoplastic molding material as claimed in claim 1, wherein the reactive groups in the rubber C) are epoxy, carboxyl, latent carboxyl, amino or amide groups.

3. A filler-containing thermoplastic molding material as claimed in claim 1, wherein the reactive groups are derived from acrylic acid, methacrylic acid, tert-butyl acrylate, maleic anhydride, glycidyl acrylate or glycidyl methacrylate or a mixture of these.

4. A filler-containing thermoplastic molding material as claimed in one or more of claims 1 to 3, wherein the rubber C) is a copolymer of
   from 50 to 98% by weight of ethylene,
   from 0.5 to 40% by weight of glycidyl acrylate, glycidyl methacrylate, acrylic acid or maleic anhydride or a mixture of these, and
   from 1 to 45% by weight of n-butyl acrylate or 2-ethyl-hexyl acrylate or a mixture of these.

5. The use of a filler-containing thermoplastic molding material as claimed in one or more of claims 1 to 4 for producing moldings.

6. A molding obtainable from a filler-containing thermoplastic molding material as claimed in claim 1 as the essential component.

## Revendications

**1.** Masses à mouler thermoplastiques chargées, présentant un état de surface et une aptitude au laquage améliorés, contenant, comme composants essentiels,
A) 42 à 90% en poids d'un polyamide thermoplastique,
B) 9,5 à 55% en poids de charges fibreuses ou particulaires ou de mélanges de celles-ci, et
C) 0,5 à 3% en poids d'un caoutchouc modifiant la résistance au choc et comportant des groupements réactifs.

**2.** Masses à mouler thermoplastiques chargées selon la revendication 1, caractérisées en ce que les groupements réactifs dans le caoutchouc C) sont des groupements époxy, carboxyle, carboxyle latents, amino ou amide.

**3.** Masses à mouler thermoplastiques chargées selon la revendication 1, caractérisées en ce que les groupements réactifs dérivent d'acide acrylique, d'acide méthacrylique, d'acrylate de tert.-butyle, d'anhydride maléique, d'acrylate de glycidyle, de méthacrylate de glycidyle ou de mélanges de ceux-ci.

**4.** Masses à mouler thermoplastiques chargées selon l'une quelconque des revendications 1 à 3, caractérisées en ce que le caoutchouc C) est un copolymère de 50 à 98% en poids d'éthylène, de 0,5 a 40% en poids d'acrylate de glycidyle, de méthacrylate de glycidyle, d'acide acrylique, d'anhydride maléique ou de mélanges de ceux-ci, et de 1 à 45% en poids d'acrylate de n-butyle, d'acrylate de 2-éthylhexyle ou de mélanges de ceux-ci.

**5.** Utilisation des masses à mouler thermoplastiques chargées selon l'une quelconque des revendications 1 à 4, pour la fabrication de corps moulés.

**6.** Corps moulés, obtenus à partir de masses à mouler thermoplastiques chargées selon l'une quelconque des revendications 1 à 4, en tant que composants essentiels.